Europäisches Patentamt

**European Patent Office**

Office européen des brevets

(11) Veröffentlichungsnummer: **0 306 441**
**A2**

(12) **EUROPÄISCHE PATENTANMELDUNG**

(21) Anmeldenummer: **88730189.3**

(22) Anmeldetag: **23.08.88**

(51) Int. Cl.⁴: **F 16 D 13/50**

(30) Priorität: **31.08.87 DE 3728970**

(43) Veröffentlichungstag der Anmeldung:
**08.03.89 Patentblatt 89/10**

(84) Benannte Vertragsstaaten:
**AT BE CH DE ES FR GB GR IT LI LU NL SE**

(71) Anmelder: **Chivari, Ilie**
**Vellwigstrasse 51**
**D-4690 Herne 1-Börnig (DE)**

(72) Erfinder: **Chivari, Ilie**
**Vellwigstrasse 51**
**D-4690 Herne 1-Börnig (DE)**

(74) Vertreter: **Weisse, Jürgen, Dipl.-Phys. et al**
**Patentanwälte Dipl.-Phys. Jürgen Weisse Dipl.-Chem. Dr.**
**Rudolf Wolgast Bökenbusch 41 Postfach 11 03 86**
**D-5620 Velbert 11 Langenberg (DE)**

(54) **Wellenkupplung.**

(57) Die Erfindung betrifft eine Wellenkupplung, die einen Winkel zwischen zwei miteinander gekuppelten, umlaufenden Teilen zuläßt. Mit jedem der Teile ist eine Kupplungshälfte (12) verbindbar. Zwischen den Kupplungshälften (12,72) sind Kupplungszwischenglieder (46,74,76) angeordnet. Diese sind über elastische Gelenke (48..., 84...) einerseits mit der ersten Kupplungshälfte (12) und andererseits mit der zweiten Kupplungshälfte (72) verbunden. Zu diesem Zweck ist jedes der Kupplungsglieder über ein erstes Paar von diametral einander gegenüberliegenden elastrischen Gelenken (48,50..) mit der ersten Kupplungshälfte und über ein zweites Paar von diametral einander gegenüberliegenden, gegenüber dem ersten Paar mit 90° winkelversetzten elastischen Gelenken (56,58) mit der zweiten Kupplungshälfte (72) unmittelbar verbunden. Die Kupplungszwischenglieder sind derart winkelversetzt angeordnet, daß sich die Beschleunigungs- und Verzögerungskräfte, welche durch die Aufnahme der kinematischen Ungleichförmigkeit der Abtriebsbewegung in den elastischen Gelenken ergeben, sich im wesentlichen aufheben.

FIG. 2

EP 0 306 441 A2

## Beschreibung

## Wellenkupplung

### Technisches Gebiet

Die Erfindung betrifft eine Wellenkupplung, die einen Winkel zwischen zwei miteinander gekuppelten, umlaufenden Teilen zuläßt, enthaltend

(a) eine erste Kupplungshälfte, die mit einem ersten umlaufenden Teil verbindbar ist,

(b) eine zweite Kupplungshälfte, die mit einem zweiten umlaufenden Teil verbindbar ist,

(c) Kupplungszwischenglieder, die über elastische Gelenke einerseits mits der ersten Kupplungshälfte und andererseits mit der zweiten Kupplungshälfte verbunden sind.

### Zugrundeliegender Stand der Technik

Eine solche Kupplung ist beispielsweise bekannt durch die US-PS 4 040 270. Bei dieser bekannten Kupplung sind als Zwischenglieder drei konzentrische, drehbar aufeinander gelagerte Ringe vorgesehen. Jeder der Ringe ist über einen Lenker mit einer ersten Kupplungshälfte und über einen anderen Lenker mit einer zweiten Kupplungshälfte verbunden. Die Lenker sind dabei über elastische Gelenke an den Ringen und an den Kupplungshälften angelenkt. Diese Kupplung ist von ihrer Kinematik her homokinetisch, d.h. die abtriebsseitige Kupplungshälfte folgt winkeltreu der antriebsseitigen Kupplungshälfte, und zwar unabhängig von einem Radialversatz der Umlaufachsen oder von einem Winkelversatz. Die elastischen Gelenke haben dabei nur die Funktion, eine Schwenkbewegung der Lenker ohne Gleitbewegung oder Drehbewegung in Wälzlagern zu ermöglichen. Die elastischen Gelenke brauchen keine Ungleichförmigkeiten der Abtriebsbewegung aufzunehmen. Solche Ungleichförmigkeiten bei Radial- oder Winkelversatz werden durch die Schwenkbewegung der Lenker verbunden mit einer Verdrehung der Ringe gegeneinander kinematisch streng kompensiert.

Bei dieser bekannten Kupplung sind die drei Ringe, also die Zwischenglieder, drehbar aneinander gelagert. Es muß also eine Lagerung für die Ringe vorgesehen werden. Außerdem sind die Lenker vorgesehen. Dadurch ergeben sich manchmal Schwierigkeiten, die Kupplung auf engem Raum unterzubringen.

### Offenbarung der Erfindung

Der Erfindung liegt die Aufgabe zugrunde, eine Kupplung der eingangs genannten Art zu schaffen, welche
-- einfach im Aufbau ist,
-- wenig Raum benötigt,
-- keine Lager aufweist und
-- einen gleichmäßigen Antrieb eines getriebenen Teils gewährleistet

Erfindungsgemäß wird diese Aufgabe dadurch gelöst, daß

(d) jedes der Kupplungszwischenglieder
-- über ein erstes Paar von diametral einander gegenüberliegenden, elastischen Gelenken mit der ersten Kupplungshälfte unmittelbar verbunden ist und
-- über ein zweites Paar von diametral einander gegenüberliegenden, gegenüber dem ersten Paar um 90° winkelversetzten elastischen Gelenken mit der zweiten Kupplungshälfte unmittelbar verbunden ist, und

(e) die Kupplungszwischenglieder derart winkelversetzt angeordnet sind, daß sich die Beschleunigungs- und Verzögerungskräfte, welche durch die Aufnahme der kinematische Ungleichförmigkeit der Abtriebsbewegung für jedes Zwischenglied in den elastischen Gelenken entstehen, sich im wesentlichen aufheben

Die Wellenkupplung nach der Erfindung ist nicht von der Kinematik her homokinetisch. Wenn ein Winkelversatz der Umlaufachsen vorliegt, wird über jedes Kupplungszwischenglied bei gleichförmigem Antrieb eine etwas ungleichförmige Abtriebsbewegung übertragen. Der abtriebseitige umlaufende Teil sucht infolge seiner Trägheit mit gleichförmiger Geschwindigkeit umzulaufen. Die Ungleichförmigkeit der Abtriebsbewegung des Kupplungszwischengliedes wird durch die Elastizität der elastischen Gelenke ausgeglichen. Dabei wirken aber Beschleunigungs- und Verzögerungskräfte auf den abtriebsseitigen umlaufenden Teil. Bei Verwendung eines einzigen Kupplungszwischengliedes würde sich daher doch eine ungleichförmige Abtriebsbewegung wie bei einem Kreuzgelenk ergeben. Nach der Erfindung sind aber mehrere Kupplungswiszchenglieder so angeordnet, daß sich die durch die Ungleichförmigkeiten entstehenden Beschleunigungs- und Verzögerungskräfte gerade im wesentlichen aufheben. Dadurch wird eine gleichförmige Abtriebsgeschwindigkeit erzielt, auch wenn die Bewegungsübertragung über jedes einzelne Kupplungszwischenglied nicht kinematisch homokinetisch ist. Die Wellenkupplung ist gewissermaßen nicht kinematisch sondern dynamisch homokinetisch.

Vorteilhaft bei der Wellenkupplung nach der Erfindung ist, daß keine Lagerung etwa der Kupplungszwischenglieder aufeinander erforderlich ist. Es sind auch keine Lenker vorhanden. Die Wellenkupplung ist daher sehr kompakt. Sie ist auch sehr einfach mit relativ wenigen Teilen aufgebaut.

Ausgestaltungen der Erfindung sind Gegenstand der Unteransprüche.

Zwei Ausführungsbeispiele der Erfindung sind nachstehend unter Bezugnahme auf die zugehörigen Zeichnungen näher erläutert.

### Kurze Beschreibung der Zeichnungen

Fig.1 zeigt einen Längsschnitt durch eine erfindungsgemäße Wellenkupplung längs der Linie C - D von Fig.2.

Fig.2 zeigt einen Schnitt längs der Linie E - F von Fig.1.

Fig.3 zeigt einen Schnitt längs der Linie g - H von Fig.2.

Fig.4 zeigt einen Längsschnitt einer anderen Ausführung einer Wellenkupplung längs der Linie I - J von Fig.5.

Fig.5 zeigt einen Schnitt längs der Linie K - L von Fig.4.

## Bevorzugte Ausführungen der Erfindung

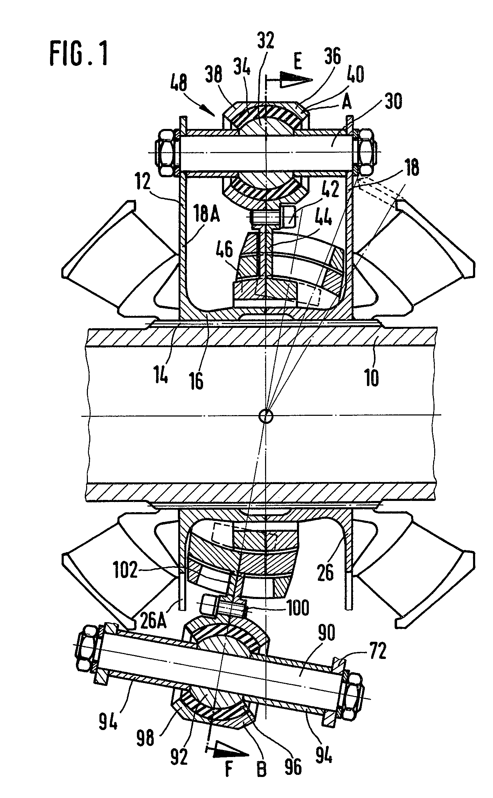

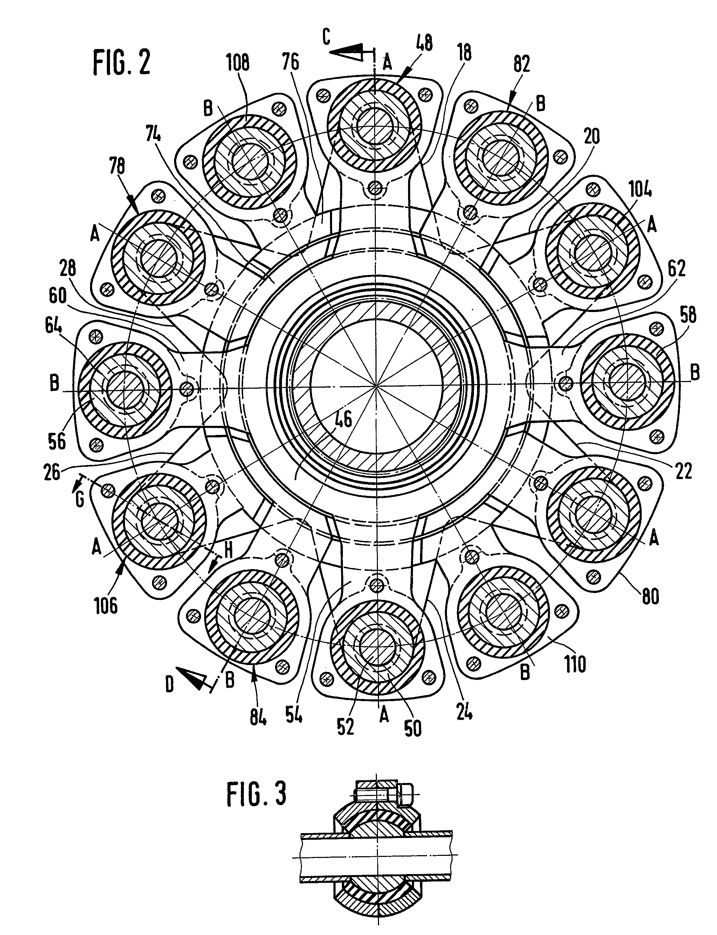

Bei der Ausführung von Fig. 1 bis 3 ist mit 10 eine Antriebswelle bezeichnet. Auf der Antriebswelle 10 sitzt ein Wangenkörper 12. Der Wangenkörper 12 bildet die antriebseitige Kupplungshälfte. Der Wangenkörper 12 ist mittels einer Keilverzahnung 14 mit der Antriebswelle 10 drehfest verbunden. Der Wangenkörper 12 weist eine Nabe 16 auf und sechs Paare von radial vorstehenden Seitenwangen 18, 18A (Fig.1), 20,22,24,26,26A (Fig.1),28 (Fig.2). Zwischen der Seitenwangen 18 und 18 A (Fig1) erstrect sich ein Lagerbolzen 30, Auf dem Lagerbolzen sitzt ein kugelförmiger Gelenkinnenteil 32. Der Gelenkinnenteil 32 ist von einer gummielastischen Schicht 34 umgeben. Die gummielastische Schicht 34 ist wiederum von einem Gelenkaußenteil 36 umgeben. Der Gelenkaußenteil 36 besteht aus zwei Hälften von dreieckiger Grundform, wie aus Fig.2 ersichtlich ist, mit konkav - sphärischen Ringflächen. Die Hälften 38,40 werden um die Gummielastische Schicht 34 herum zusammengesetzt und durch Schrauben 42 gegeneinandergezogen. An die Hälften 38,40 schließt sich ein radialer Arm 44 an, der im oberen Teil von Fig.1 mit einem inneren Ring 46 verbunden ist. Der Arm 44 und der Ring 46 sind aus Montagegründen ebenfalls zweiteilig, wobei jeder Teil mit einer der Hälften 38 und 40 aus einem Stück besteht. Das ganze ist ein elastisches Gelenk 48, über das der innere Ring 46, der ein Kupplungszwischenglied bildet, mit der antriebsseitigen Kupplungshälfte verbunden ist. Ein entsprechendes elastisches Gelenk 50 ist zwischen den Seitenwangen 24 (Fig.2) auf einem Bolzen 52 angeordnet. Dieses Gelenk 50 liegt dem Gelenk 48 diametral gegenüber und ist über einen Arm 54 ebenfalls mit dem innersten Ring 46 verbunden.

An dem innersten Ring 46 sind um 90° gegen die Gelenke 48 und 50 winkelversetzt zwei entsprechend aufgebaute elastische Gelenke 56 und 58 an Armen 60 bzw.62 angebracht. Die Gelenkinnenteile 64 bzw. 66 dieser Gelenke 56 bzw. 58 sind über Lagerbolzen 68 bzw. 70 mit einer abtriebsseitigen Kupplungshälfte 72 verbunden.

Es erfolgt also ein Antrieb von der Antriebswelle 10 über das Kupplungszwischenglied in Form der Ringes 46 auf die abtriebsseitige umlaufende Kupplungshälfte 72. Dabei lassen die elastischen Gelenke einen Winkelversatz zwischen den Achsen der Antriebswelle 10 und der abtriebsseitigen Kupplungshälfte 72 zu. Die Bewegungsübertragung ist dabei allerdings nicht homokinetisch. Der konstanten Drehgeschwindigkeit sind abtriebsseitig sinusartige Drehzahlschwankungen überlagert. Jedes Kupplungszwischenglied für sich übt periodische Beschleunigungs- und Verzögerungskräfte auf den abtriebseitigen Teil aus, so daß durch die Trägheit dieses Teils die Beschleunigungs- und Verzögerungskräfte an den elastischen Gelenken wirksam werden.

Es sind nun aber insgesamt drei Kupplungszwischenglieder 46,74 und 76 in Form von konzentrischen Ringen vorgesehen. An dem Kupplungszwischenglied 74 sitzen zwei diametral einander gegenüberliegende, elastische Gelenke 78 und 80, über welche das Kupplungszwischenglied 74 mit dem Wangenkörper 12 verbunden ist. Um 90° winkelversetzt zu diesem Paar von Gelenken 78,80 sitzen an dem Kupplungszwischenglied 74 zwei elastische Gelenke 82 und 84, über welche das Kupplungszwischenglied 74 mit der abtriebseitigen Kupplungshälfte 72 verbunden ist.

Die Verbindung ist im unteren Teil von Fig.1 anhand des elastischen Gelenks 84 im Schnitt dargestellt. In der abtriebseitigen Kupplungshälfte 72 sitzt ein Bolzen 90. Auf dem Bolzen 90 ist ein Gelenkinnenteil 92 gelagert. Der Gelenkinnenteil 92 wird durch Abstandshülsen 94 zentriert gehalten. Der Gelenkinnenteil 92 ist von einer gummielastischen Schicht 96 umgeben. Die gummielastische Schicht 96 ist wiederum von einem Gelenkaußenteil 98 umgeben. Der Gelenkaußenteil 98 besteht, wie der Gelenkaußenteil 38 aus zwei Hälften mit sphärischen Ringflächen, welche um die gummielastische Schicht 96 herum zusammengesetzt sind. Die Hälften sind durch Schrauben 100 zusammengezogen. Der Gelenkaußenteil 98 ist durch einen radialen Arm 102 mit dem Kupplungszwischenglied 84, also dem mittleren Ring, verbunden.

Wie aus Fig.1 ersichtlich ist, ist die abtriebseitige Kupplungshälfte 72 gegenüber der Antriebswelle 10 und der antriebseitigen Kupplungshälfte, nämlich dem Wangenkörper 12, verkantet.

Das dritte Kupplungszwischenglied 76 in Form des äußeren Ringes ist über elastische Gelenke 104 und 106 mit der antriebseitigen Kupplungshälfte, d.h. dem Wangenkörper 12, und über elastische Gelenke 108,110 mit der abtriebseitigen Kupplungshälfte 72 verbunden. Die elastischen Gelenke sind jeweils um 30° gegeneinander winkelversetzt. Es ist jeweis ein mit der abtriebseitigen Kupplungshälfte 72 verbundenes Gelenk, z.B.108, zwischen zwei mit der antriebseitigen Kupplungshälfte, d.h. dem Wangenkörper 12, angeordnet. Die mit dem zweiten Kupplungszwischenglied 74, d.h. dem mittleren Ring, verbundenen elastischen Gelenke, z.B.78, sind um 60° gegenüber den entsprechenden, mit dem ersten Kupplungszwischenglied 46 verbundenen Gelenken, z.B.48, winkelversetzt. Die mit dem dritten Kupplungsglied 76, d.h. mit dem äußeren Ring, verbundenen elastischen Gelenke, z.B. 106, sind um 120° gegenüber den entsprechenden, mit dem ersten Kupplungszwischenglied 46 verbundenen Gelenken z.B.48, winkelversetzt. Die Kupplungszwischenglieder sind nicht aneinander oder aufeinander gelagert sondern einzeln mit den Kupplungshälften beweglich.

Jedes einzelne Kupplungszwischenglied 46,74 und 76 überträgt bei einem Winkelversatz eine ungleichförmige Abtriebsbewegung, bei welcher Beschleunigungs - und Verzögerungskräfte auftreten. Dadurch, daß die Kupplungszwischenglieder mit den zugehörigen Gelenken in der beschriebenen Weise winkelversetzt sind, sucht jedes der drei Kupplungszwischenglieder 46,74,76 der abtriebseitigen Kupplungshälfte 72 eine anders ungleichförmige Bewegung zu erteilen. Die Unterschiede der Abtriebsbewegung werden wegmäßig von den elastischen Gelenken aufgenommen. Es treten dabei jedoch Kräfte auf, welche die abtriebseitige Kupplungshälfte zu beschleunigen trachten. Der Winkelversatz der Kupplungszwischenglied und Gelenke ist aber so, daß sich die durch die Ungleichförmigkeiten der Abtriebsbewegungen der Kupplungszwischenglieder ergebenden Beschleunigungs- und Verzögerungskräfte aufheben, so daß auf die abtriebseitige Kupplungshälfte und den abtriebseitigen umlaufenden Teil ein konstantes und nicht schwankendes Antriebdrehmoment wirkt.

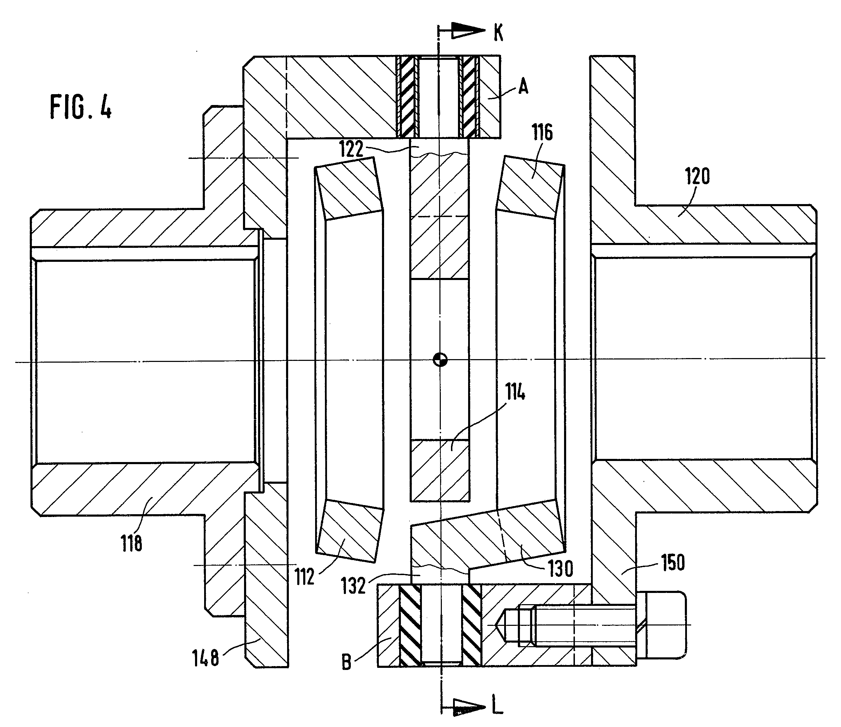

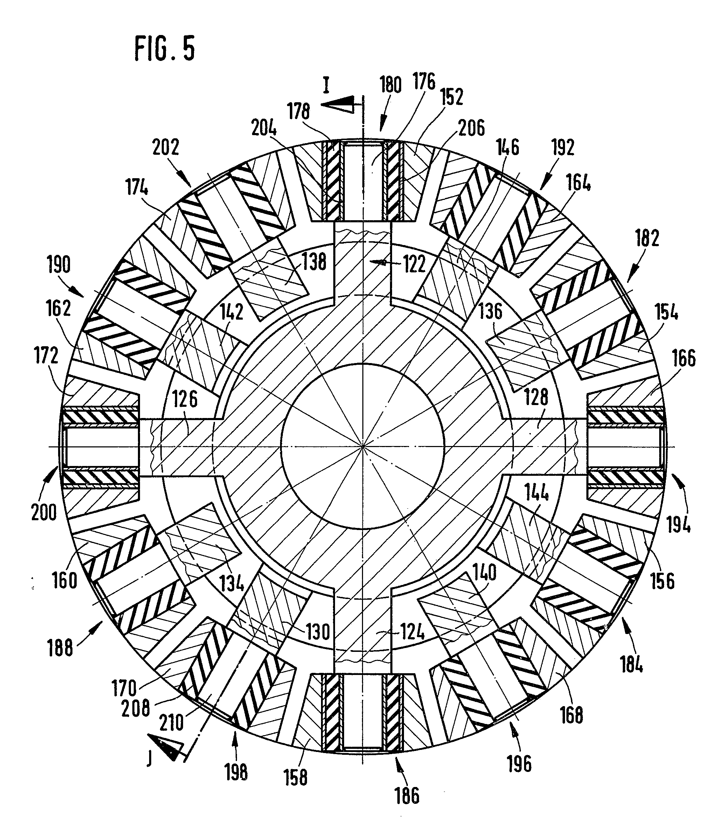

Fig.4 und 5 zeigen eine Ausführungsform, bei welcher die drei Kupplungszwischenglieder 112, 114 und 116 von drei Ringen gebildet sind, die gleichachsig in Achsrichtung gesehen hintereinander zwischen den beiden Kupplungshälften 118 und 120 angeordnet sind. Die Kupplungszwischenglieder weisen radiale Arme auf, die über elastische Lager mit den Kupplungshälften 118 oder 120 verbunden sind. Die Arme 122, 124, 126 und 128 an dem mittleren Kupplungszwischenglied erstrecken sich gerade radial. Die Arme z.B. 130 (Fig.4) der beiden äußeren Kupplungszwischenglieder 112 und 116 sind so nach innen gekröpft, daß die in Radialrichtung sich erstreckenden Enden 132 der Arme in den Ebene der Arme 122, 124, 126 und 128 liegen.

An dem Kupplungszwischenglied 112 sind diametral gegenüberliegende Arme 134 und 136 vorgesehen sowie zwei weitere, diametral gegenüberliegende und gegenüber den Armen 134, 136 um 90° winkelversetzte Arme 138 und 140. An dem mittleren Kupplungszwischenglied sind die beiden Arme 122 und 124 diametral einander gegenüberliegend angeordnet. Die Arme 126 und 128 sind ebenfalls diametral einander gegenüberliegend und um 90° gegen die Arme 122, 124 winkelversetzt. An dem Kupplungszwischenglied 116 sind zwei Arme 142 und 144 diametral einander gegenüberliegend angeordnet. Zwei weitere Arme 146 und 130 sind ebenfalls diametral einander gegenüberliegend an dem Kupplungszwischenglied 116 angeordnet und um 90° gegenüber den Armen 142 und 144 winkelversetzt.

An den Kupplungshälften 118 und 120 sind Flansche 148 bzw 150 angebracht. An den Flanschen 148 und 150 sitzen Klauen 152, 154, 156, 158, 160, 162 bzw. 164, 166, 168, 170, 172, 174, die gegeneinandergerichtet sind, wie aus Fig.4 ersichtlich ist, und mit Abstand ineinandergreifen. An den Armen der Kupplungszwischenglieder sitzen radiale Zapfen. z.B. der Zapfen 176 an dem Arm 122. Diese Zapfen sind über hohlzylindrische Gummiteile, z.B. Gummiteil 178, in je einer der Klauen 152 bis 174 elastisch gelagert. Die Zapfen mit den Gummiteilen bilden elastische Gelenke 180, 182, 184, 186, 188, 190 bzw. 192, 194, 196, 198, 200, 202, über welche die Kupplungszwischenglieder 112,114,116 mit den Kupplungshälften 18 bzw.120 verbunden sind. Wie aus Fig.5 ersichtlich ist, ist beispielsweise das Kupplungszwischenglied über die Arme 122 und 124 und die elastischen Gelenke 180 und 186 mit den Klauen 152 und 158 der antriebseitigen Kupplungshälfte 118 und über die Arme 126 jund 128 und die elastischen Gelenke 200 und 194 in einer zur Ebene der Arme 122,124 senkrechten Ebene mit den Klauen 172 bzw.166 der abtriebseitigen Kupplungshälfte 120 verbunden. In entsprechender Weise sind die Kupplungszwischenglieder 112 und 116 um 60° bzw. 120° winkelversetzt in jeweils zueinander senkrechten Ebenen mit der Kupplungshälfte 118 und der Kupplungshälfte 120 über elastische Gelenke 182,188 und 202,196 bzw. 184,190 und 192,198 verbunden.

Die Wirkungsweise der in Fig.4 und 5 dargestellten Wellenkupplung ist die gleiche wie die der Wellenkupplung von Fig.1 bis 3. Die Wellenkupplung von Fig.4 und 5 ist konstruktiv sehr einfach. Sowohl die Kupplungshälften 118 und 120 als auch die Kupplungszwischenglieder 112 und 116 sind jeweils identische Teile. Auch die elastischen Gelenke sind sehr einfach aufgebaut. Es sind zwei Varianten von Gelenken dargestellt: Die Gelenke 180,194, 186 und 200, die dem mittleren Kupplungszwischenglied 114 zugeordnet sind, enthalten innere und äußere Buchsen 204 bzw. 2o6, mit denen der Gummikörper 178 durch Vulkanisieren verbunden ist. Bei den übrigen Gelenken ist der Gummikörper ,z.B.208 unmittelbar mit dem Zapfen 210 und der Klaue 170 verbunden, wie anhand des Gelenks 198 dargestellt ist.

## Patentansprüche

1. Wellenkupplung, die einen Winkel zwischen zwei miteinander gekuppelten, umlaufenden Teilen zuläßt, enthaltend
(a) eine erste Kupplungshälfte ((12;118), die mit einem ersten umlaufenden Teil (10) verbindbar ist,
(b) eine zweite Kupplungshälfte (72;120), die mit einem zweiten umlaufenden Teil verbindbar ist,
(c) Kupplungszwischenglieder (46,74,76;112,114,116), die über elastische, allseitig bewegliche Gelenke (48..84..;180,,198..) einerseits mit der ersten Kupplungshälfte (12;118) und andererseits mit der zweiten Kupplungshälfte (72;120) verbunden sind,
**dadurch gekennzeichnet, daß**
(d) jedes der Kupplungszwischenglieder (46,74,76; 112,114,116)
-- über ein erstes Paar von diametral einander gegenüberliegenden elastischen Gelenken (48,50..;180,186..) mit der ersten Kupplungshälfte (12,118) unmittelbar verbunden ist und
-- über ein zweites Paar von diametral einander gegenüberliegenden, gegenüber dem ersten Paar um 90° winkelversetzten elastischen Gelenken (56,58..;194,200..) mit der zweiten Kupplungshälfte (72,120) unmittelbar verbunden sind, und

(e) die Kupplungszwischenglieder (46,74,76; 112,114, 116) derart winkelversetzt angeordnet sind, daß sich die Beschleunigungs- und Verzögerungskräfte, welche durch die Aufnahme der kinematischen Ungleichförmigkeit der Abtriebsbewegung für jedes Zwischenglied in den elastischen Gelenken (48,50.. 56,58..; 180,186..194,200) entstehen, sich im wesentlichen aufheben.

2. Wellenkupplung nach Anspruch 1, **dadurch gekennzeichnet, daß** die Kupplungszwischenglieder (46,74,76) von drei konzentrischen Ringen gebildet sind.

3. Wellenkupplung nach Anspruch 1, **dadurch gekennzeichnet, daß** die Kupplungszwischenglieder (112,114, 116) von drei gleichachsig in Axialrichtung gesehen hintereinander angeordneten Ringen gebildet sind.

4. Wellenkupplung nach Anspruch 2 oder 3, **dadurch gekennzeichnet, daß** entsprechende elastische Gelenke der drei Kupplungszwischenglieder (46,74,76;112,114, 116) jeweils um 60° bzw. 120° gegeneinander winkelversetzt angeordnet sind.

5. Wellenkupplung nach einem der Ansprüche 1 bis 4, **dadurch gekennzeichnet, daß** die elastischen Gelenke (48..84..; 180..198..) an radialen Armen (44..,84..; 122..,130..) der Kupplungszwischenglieder (46,74,76; 112,114,116) sitzen.

6. Wellenkupplung nach Anspruch 2, **dadurch gekennzeichnet, daß** jedes der elastischen Gelenke (48..)

(a) einen kugelförmigen Gelenkinnenteil (32),

(b) eine den Gelenkinnenteil (32) umgebende, gummielastische Schicht (34) und

(c) einen Gelenkaußenteil (38) aufweisen, der mit einer konkav-sphärischen Innenfläche die gummielastische Schicht umgreift,

(d) wobei der Gelenkinnenteil (32,92) mit einer Kupplungshälfte (12,72) und der Gelenkaußenteil mit einem Kupplungszwischenglied (46) verbunden ist.

7. Wellenkupplung nach Anspruch 6, **dadurch gekennzeichnet, daß**

(a) der Gelenkinnenteil (32,92) eine diametrale Bohrung aufweist, durch welche ein an der Kupplungshälfte (12,72) beidseitig gehalterter Bolzen (30,90) hindurchgeführt ist, und

(b) der Gelenkaußenteil (38,98) von zwei Hälften gebildet ist, die je einen Durchbruch aufweisen, durch welchen der Bolzen hindurchragt und der von einer konkav-sphärischen Ringfläche umgeben ist, wobei diese beiden Hälften um die gummielastische Schicht herum zusammengesetzt und gegeneinander festgezogen sind und die beiden Ringflächen die besagte konkav-spärische Innenfläche bilden.

8. Wellenkupplung nach den Ansprüchen 3 und 5, **dadurch gekennzeichnet, daß**

(a) die radialen Arme eines mittleren Kupplungszwischengliedes (114) sich radial in der Ebene dieses Kupplungszwischengliedes erstrecken und

(b) die radialen Arme der aüßeren Kupplungszwischenglieder (112,116) so über das mittlere Kupplungszwischenglied gekröpft sind, daß die zugehörigen elastischen Gelenke ebenfalls in der besagten Ebene liegen.

9. Wellenkupplung nach Anspruch 8 **dadurch gekennzeichnet, daß**

(a) an den armen (122.. 130..) der Kupplungszwischenglieder (112,114,116) radiale Zapfen (176..210..) sitzen,

(b) die Zapfen (176..210..) von einem hohlzylindrischen Gummikörper (178..208..) umgeben sind

(c) die Kupplungshälften (118,120) axial sich gegeneinander erstreckende und mit Abstand ineinandergreifende Klauen (152..170) aufweisen und

(d) die hohlzylindrischen Gummikörper (178..210..) in diesen Klauen (152..170..) gehaltert sind, wobei die Zapfen mit den Gummikörpern und der Halterung in den Klauen die elastischen Gelenke bilden.

FIG.1

FIG. 2

FIG. 3

FIG. 4

FIG. 5